# EUROPEAN PATENT APPLICATION

(11) **EP 1 871 042 A1**
(43) Date of publication of application: **26.12.2007**
(21) Application number: 07110435.0
(22) Date of filing: 18.06.2007
(51) Int. Cl.: H04L 12/28

(54) **Method of optimising access to a communication network**

(30) Priority: 19.06.2006 FR 0652169
(71) Applicant: Alcatel Lucent, 75008 Paris (FR)
(72) Inventor: Bonnaud, Fabrice, 29260 Le Folgoet (FR); Le Creff, Michel, 95450 Vigny (FR); Litteaut, Jacques, 78160 Marly le Roi (FR)
(74) Representative: Sciaux, Edmond

(57) **Abstract**

This method is applied before setting up a call, to transmit so-called current data from a user terminal (2, 17, 19, 21, 24) to a remote terminal through a telecommunication network selected among a plurality of telecommunication networks (R₁, R₂, R₃ ; 13, 15, 23) capable of transmitting current data from said user terminal to said remote terminal, these networks being managed by a plurality of operators, consisting of:
- updating a database (4) as a function of transmissions made previously through each operator,
- for each operator, determining (103, 204) the value of at least one operator parameter from information stored in said database (4), and from at least one data parameter characterising said current data to be transmitted,
- determining which operator optimises the cost for transmission of current data,
- selecting a network corresponding to the operator thus determined, then transmitting said current data through the network selected in this way.

## Description

The purpose of this invention is a method of optimising access to a telecommunication network. The number of telecommunication networks that a user can access and the number of operators who provide access to them are continuously increasing. Telecommunication networks can be used for synchronous and asynchronous communications, for example Voice on IP (VoIP), video, e-mail type data transmissions, etc.

Systems have been developed to manage the resources of a network as a function of criteria or rules such as the user's identity, existing traffic conditions, the required security level, etc.

Document US 2003/0023711 describes a rule-based network management system (PBNM) capable of identifying one or more rules associated with a network component. To do this, the system identifies one or more rules directly associated with the component, generates a list of the groups to which the component belongs and identifies one or more rules associated with each group in the list.

Operators usually have different tariff systems as a function of the time, distance, quality of service, security level, etc.

For example, a user has a plurality of operators or service providers that he can use to telephone through the internet network, each operator or service provider having his own method of determining rates for communications.

Thus, the French FREE and WANADOO operators receive a monthly fee for provision of an ADSL (Asymmetric Digital Subscriber Line) line at a user, that enables access to the Internet, reception of television programs, provision of an Email box and setting up some types of free telephone communications. Furthermore, some telephone communications (for example to mobile telephones) are invoiced call by call with a different price depending on whether the called party belongs to a mobile telephone operator.

The French WENGO operator offers a telephony on Internet software free of charge. This software can be used to set up a free computer to computer telephone communication, and can be used to call persons connected to fixed or mobile telephone networks, but these calls using telephone networks are charged to a prepaid account.

Mobile telephony operators also offer several types of payments for communications:
- fixed fee for defined duration for national calls and call by call invoicing for international communications,
- pre-payment by predetermined amounts and call by call invoicing for national and international communications,
- monthly invoice for access to the network and call by call invoicing for international communications.

Some operators also vary rates depending on the time and if the fixed fee is exceeded.

In general, pre-payments are valid for a predetermine time and amounts not spent are lost for the user at the end of the predetermined period.

Secondly, the user can have a multimode terminal that he can use to access different networks types, for example GSM (Global System for Mobile communications) and WLAN (Wireless Local Area Network), each network having a different rate for communications.

A user can use Internet sites, for example the www.comparatel.fr site with comparisons of rates from different telephone operators, to choose one or several subscriptions at one or several operators.

When a user has taken out subscriptions with several operators, it is known that a minimum cost routing (PBX) system can be used to select the most economic operator for routing a given call, the operator being selected by referring to local tables stored in the system.

However, PBX systems only consider the cost. Other criteria have to be taken into account, for example the quality of service or the security level. From the user's point of view, not all outgoing contents have the same requirements for these criteria. Therefore it is useful to be able to select the least expensive network access as a function of the requirements of the contents to be sent.

Furthermore, local tables store static information and cannot take account of a temporary rebate proposed by an operator.

Finally, PBX systems cannot be used to verify remaining credits in a user's account (fixed fees or pre-paid account) before a call is routed.

It is also known that individual equipment can be used inserted in series with a subscriber telephone line, to modify the called number to select the least expensive operator for a given called number. The selection mode varies depending on the type of equipment that can manage at least two different operators .

There is no existing solutions capable of taking account of all tariff variants of telephony on Internet operators.

Thus with known systems, a user cannot easily and personally optimise these expenses that are dependent on operators, particularly telephone expenses.

The purpose of this invention is to disclose a method of optimising a criterion related to data transmission from a user terminal to a remote terminal through a telecommunication network that avoids at least some of the above-mentioned disadvantages, and that can be used to select the most suitable operator to transmit current data.

To achieve this, the purpose of the invention is a method of optimising access to a telecommunication network before setting up a call, to transmit so-called current data from a user terminal to a remote terminal through a telecommunication network selected among a plurality of telecommunication networks, and capable of transmitting current data from said user terminal to said remote terminal, these networks being managed by a plurality of operators, consisting of:
a) for each operator, determining the value of at least one operator parameter from information stored in a database (4), and from at least one data parameter characterising said current data to be transmitted,
b) as a function of the values determined in step a, determining which operator optimises the cost for transmission of current data,
c) selecting a network corresponding to the operator thus determined, then transmitting said current data through the network selected in this way;
**characterised** in that before the value of at least one operator parameter is determined from information stored in a database, it also includes a step consisting of updating said database as a function of transmissions made previously through each operator.

According to one embodiment, the value of at least one operator parameter is determined using the sub-steps described below, for each operator:
- determine the address of a server of said operator,
- and query said server to determine a value of at least one operator parameter. According to one embodiment, it includes the following sub-steps to query said server to determine a value of at least one operator parameter:
   - transmit an identifier and a password associated with a user account to said server, and
   - query said server to obtain information about the current state of said user account.

Another purpose of the invention is a computer program comprising instruction codes that can be read or written on a medium and that can be executed by a digital machine to implement the steps in the above mentioned method.

Another purpose of the invention is a recording medium designed to implement the above mentioned method.

Another purpose of the invention is a device programmed to implement the steps in the above mentioned method.

The invention will be better understood and other purposes, details, characteristics and advantages of the invention will become clearer after reading the following detailed description of several embodiments of the invention given as purely illustrative and non-limitative examples with reference to the appended diagrammatic figures,
wherein:
- figure 1 is a simplified diagrammatic view of a local network with means of optimising a criterion related to data transmission according to a first embodiment of the invention;
- figure 2 is a functional diagram representing steps in a method of transmitting current data originating from a user terminal in figure 1, to a remote terminal;
- figure 3 is a simplified diagrammatic view of equipment comprising means of optimising a criterion related to data transmission using a second embodiment of the invention;
- figure 4 is a functional diagram representing steps in a method of transmitting current data from a user terminal connected to the equipment in figure 3, to a remote terminal;

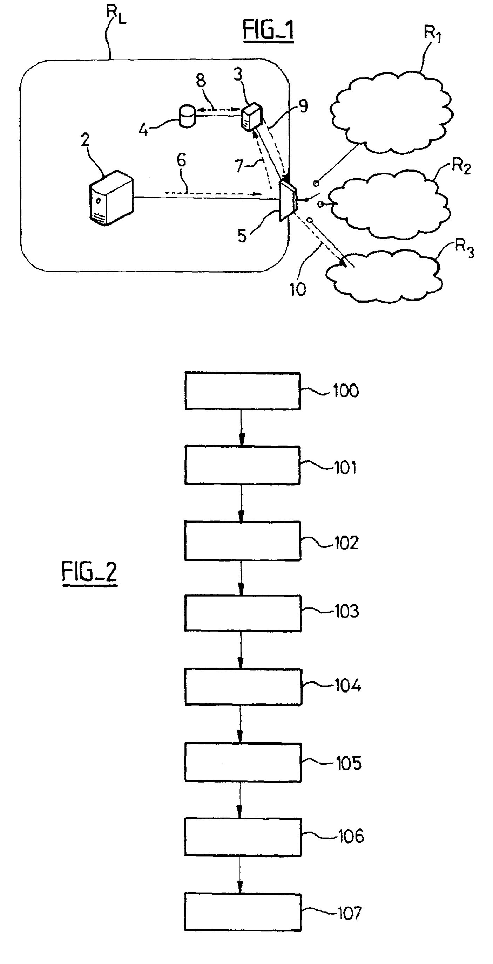

**Figure 1** shows a local area network (LAN) R_{L} of a company. The local area network R_{L} may for example use the IP (Internet Protocol) protocol. The company has taken out three subscriptions with three operators O₁, O₂ and O₃ respectively. An employee of the company can thus access network R₁ of the first operator O₁, network R₂ of the second operator O₂ and network R₃ of the third operator O₃, through the local area network R_{L}.

The local area network R_{L} comprises a user terminal 2, for example a computer. The local area network R_{L} comprises a rules server 3. The rules server 3 controls connection of the user terminal 2 to networks R₁, R₂, R₃. The local area network R_{L} comprises a database 4, connected to the rules server 3.

The database 4 contains stored data called rules related to each operator O₁, O₂, O₃ and to the user, in this case the company. Rules include static rules. Static rules include fixed rates of operators O₁, O₂, O₃ for example as a function of the duration of the communication, the volume of exchanged data, the destination (distance, international, etc.), the network type (3G,...). Static rules include the quality of service (QoS) of operators O₁, O₂, O₃. The static rules also include information about existing private links between different sites or companies and accesses shared between several companies. Obviously, this list is not exhaustive and static rules may include any type of information related to operators and/or the company. For example, static rules are output in the database 4 through a network administrator.

The rules include dynamic rules. Dynamic rules include information about current data to be transmitted, for example the data type (VoIP, video, e-mail, instant message, etc..). Dynamic rules include data related to the current state of previous transmissions, for example the quantity of data already transmitted, the value of remaining credit at an operator O₁, O₂, O₃ and/or the expiration time of this credit. Dynamic rules are updated dynamically, as will be described in detail later.

The local area network R_{L} comprises a device 5 to make the connection of the local area network R_{L} to external networks R₁, R₂, P₃. The device 5 may for example be a Session Border Controller SBC. The controller 5 is connected to the rules server 3.

With reference to **figure 2**, an operation to transmit current data originating from the user terminal 2 to a remote terminal (not shown) will now be described.

In step 100, an employee of the company issues a command to send current data from a man-machine interface (not shown) on the user terminal 2, to the remote terminal. The remote terminal does not belong to the local area network R_{L}. Current data are sent through the user terminal 2 to the controller 5, as shown symbolically by the arrow in dashed lines 6.

In step 101, the controller 5 receives current data from the user terminal 2. At this moment, the controller 5 generates a query to select the most suitable operator to transmit the current data. The operator considered as being the most appropriate to transmit the current data will be the operator who optimises a criterion related to data transmission, for example the global cost to the company of invoices from operators O₁, O₂ and O₃. As a variant, the criterion to be optimised could be for example the distribution of transmissions or the quality of service. The controller 5 transmits the query to the rules server 5, as shown symbolically by the arrow in dashed lines 7.

In step 102, the rules server 3 receives the selection query from an operator. At this moment, the server 3 analyses the query. The query may for example contain information about current data, such as the type of the current data, the required security level for the transmission, etc. The server 3 queries the database 4, as shown symbolically by the double arrow in dashed lines 8, to determine which of the operators with which the user has taken out a subscription, in other words which among the operators O₁, O₂ and O₃, could manage the transmission. For example, it will be considered that each operator O₁, O₂ and O₃ is capable of managing the transmission of current data from the user terminal 2 to the remote terminal through the network R₁, R₂ and R₃, respectively.

In step 103, the rules server 3 determines a value of an operator parameter associated with the transmission of current data, for each operator capable of managing the transmission, in other words in the example operators O₁, O₂ and O₃. For example, the operator parameter could be the price of the transmission, the quality of service of the transmission, the security level of the transmission, or a combination of these parameters, etc.

In step 104, the server 3 selects which operator optimises the global cost as a function of constraints such as the necessary security, previous or current transmissions made using an operator (termination of a fixed fee, available passband, etc.) starting from values of the operator parameter. For example, O₃ might be selected.

In step 105, the rules server 3 issues a command to the controller 5 to authorise transmission of current data through the operator selected in step 104, in this case operator O₃, as shown symbolically by the arrow in dashed lines 9.

In step 106, the current data are transmitted to the remote terminal through the selected operator, in this case operator O₃, as shown symbolically by the arrow in dashed lines 10.

In step 107, the controller 5 transmits information about transmission of current data, for example the quantity of data transmitted, to the database 4. The information is stored in the database 4. For example, step 106 and step 107 may be done simultaneously. This retroaction of the controller 5 enables dynamic database rules to be updated automatically and dynamically. For the purposes of this description, the term dynamic means that dynamic rules are updated in real time, or at least regularly with each data transmission.

This method optimises the criterion, in this case the cost, more efficiently because it uses a larger number of rules and the rules are updated dynamically.

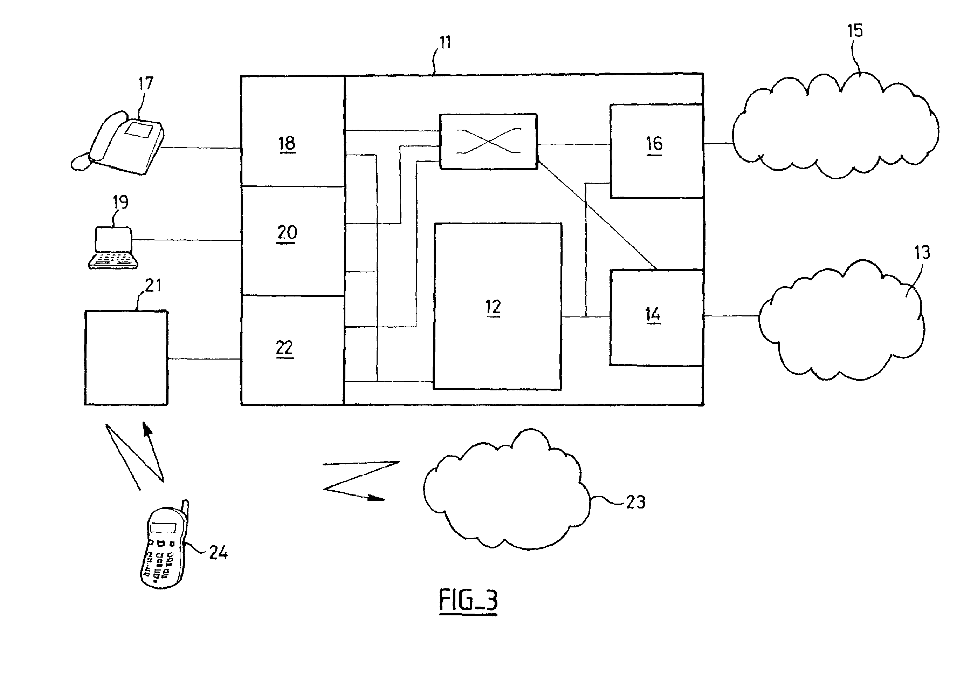

A second embodiment of the invention will now be described with reference to **figure 3**.

In this embodiment, equipment 11 is provided with an agent 12 to select the most appropriate operator to transmit the current data. As a variant, the agent 12 may be external to the equipment 1 1 and connected to the equipment 11. The equipment 11 may for example be ADSL (Asymmetric Digital Subscriber Line) equipment or a company communication system.

The agent 12 offers a man-machine interface that it uses to exchange commands and/or information with a user. In particular, the interface enables the user to set parameters for a call option. The call option may be routing at minimum cost, optimisation of credits available on fixed-fee or pre-paid type accounts, or a combination of the two. The call option may be configured by an administrator when the equipment 11 is put into place or it may be configured for each transmission by the user controlling the transmission. In the case of a call by call configuration, the call can be configured by the user firstly pressing a special key (not shown) on the equipment 11. Note that other call options could be used in the same way as for the first embodiment, for example the quality of service or security.

The agent 12 comprises or is connected to a memory (not shown) in which information about each user subscription is stored, for example of the invoicing type (fixed fee, pre-payment, etc.), the type of network corresponding to the called terminal (public switched telephone network (PSTN), public line mobile network (PLMN), Internet, etc.) and the address of operator servers.

The equipment 11 is connected to the internet network 13 through an Internet access module 14 and to a PSTN network 15 through a network access module 16.

Secondly, the equipment 11 is connected to a set of user terminals. The set of user terminals may for example comprise an analogue telephone 17 connected to the equipment 11 through an interface 18, a PC 19 connected to the equipment through an interface 20, and a wireless local area network (WLAN) terminal 21, connected to the equipment 11 through an interface 22.

The set of user terminals also comprises a WLAN-GSM dual mode type terminal 24 connected firstly to the equipment 11 through the WLAN terminal 21 and secondly to a GSM network 23. The terminal 24 cooperates with each of the WLAN and GSM networks, exchanging signalling information.

The user has subscribed to four subscriptions at four different operators, namely a subscription at a PSTN operator, a subscription at a first internet operator, a subscription at a second Internet operator and a subscription at a GSM operator.

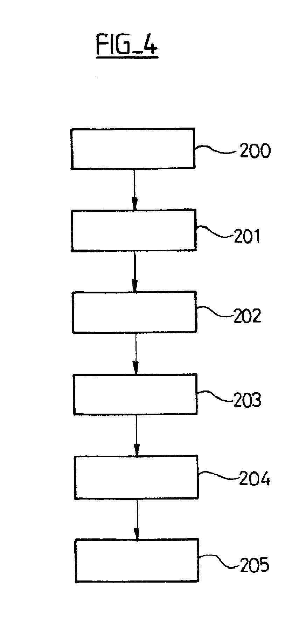

With reference to **figure 4**, a current data transmission operation from a user terminal 17, 19 or 21 to a remote terminal (not shown) will now be described according to the second embodiment of the invention in the case in which the call option is routing at minimum cost.

In step 200, a user issues a command to set up a telephone communication, in other words the user dials the telephone number of the remote terminal 17, 19, 21 on the keyboard. Note that the method is not limited to setting up a telephone call. In general in step 200, the user issues a command to transmit current data, the current data in this example being related to a telephone communication. The request set-up a telephone communication is sent to the equipment 11.

In step 201, the agent 12 analyses the telephone number of the remote terminal to determine a parameter characterising the call, for example the call type (national or international), the nature of the network corresponding to the called terminal (PSTN, PLMN, Internet, etc.).

In step 202, the agent 12 queries the memory to determine the addresses of operator servers that could enable setting up the telephone communication. The server of an operator is the server comprising a database storing information about the operator, for example operator invoicing rates.

In step 203, the agent 12 sends information request queries to each server. Each query contains information about the current telephone communication, for example the nature of the network used, the time, etc.

In step 204, the agent 12 receives response messages from each server containing the requested information, for example the price of the telephone call as a function of the duration. At this time, the agent 12 determines a value of an operator parameter associated with the current telephone communication. For example, the operator parameter is the cost of the communication that depends on the duration. The agent 12 compares different values of the parameter for each operator so as to determine the operator and/or nature of the network (PSTN, PLMN, Internet) selected to route the call.

In step 205, the agent 12 orders a telephone communication to be set up through the operator selected in step 204.

An operation to transmit current data originating form the user terminal 17, 19, 21 to a remote terminal (not shown) will now be described according to the second embodiment of the invention, in the case in which the call option is optimisation of credits.

Steps 200 to 202 are similar to the steps described previously.

In step 203, the agent 12 sends information request queries to each server. Each query contains the user's identifier and passwords to enable access to a user account in the server.

In step 204, the agent 12 receives response messages from each server containing requested information, for example money credit. At this moment, the agent 12 determines a value of an operator parameter associated with the current telephone communication. The operator parameter may for example be the quantity of credits. The agent 12 compares the different values of the parameter for each operator so as to determine the operator and/or nature of the network chosen (PSTN, PLMN, Internet) to route the telephone communication.

In step 205, the agent 12 issues a command to set up the telephone communication through the operator selected in step 204.

A first example of transmission of current data from the user terminal 17, 19, 21 to a remote terminal (not shown) will now be described, according to the second embodiment of the invention in the case in which the call option is a combination between routing at minimum cost and optimisation of credits.

In step 200, the user dials an international call number to England from a terminal 17, 19 or 21.

In step 201, the agent 12 analyses the number and determines that it is an international call.

In step 202, the agent 12 determines the addresses of servers of the PSTN operator, the two Internet operators and the GSM operator.

In step 203, the agent 12 sends an information query to the PSTN operator's server. For example, the requested information may include the price of a call to England, the state of money credits and validity dates of these credits. The query also includes the identified password of the user to enable access to the user account in the operator's server. The agent 12 sends a similar query to the server of each of the two Internet operators and the GSM operator.

In step 204, each server generates a response message containing the requested information. It will be assumed that the PSTN operator offers a 60% discount for communications to England and that this is taken into account in its response message. Note that the fact that the required information is obtained by querying servers of the operators means that up to date information is obtained dynamically without needing to manage updating of a database. In this case, operators manage updating of their own database.

The agent 12 compares remaining times to use credits with a predefined threshold to determine if the operator should be chosen as a function of the minimum cost or optimisation of credits. The threshold may be chosen by the user himself or by a system administrator. In this case, it is assumed for example that the remaining times to use credits are greater than the threshold.

The agent 12 compares the different values of the operator parameter for each operator and for example selects the PSTN operator to route the call.

In step 205, the agent 12 issues a command to set up the communication through the PSTN operator.

A second example transmission of current data originating from the user terminal 17, 19, 21 to a remote terminal (not shown) will now be described according to the second embodiment of the invention in the case in which the call option is a combination between routing at minimum cost and optimisation of credits.

In step 200, the user dials a national call number from terminal 17, 19 or 21.

In this example, it is assumed that the user has a large credit for national calls on a pre-paid account at the first Internet operator, although there are only a few hours remaining before this account expires.

In step 204, the agent 12 analyses the response messages and determines that the pre-paid account with the first Internet operator for national calls is nearing its expiration date and that there is a significant cash credit, in other words the remaining time to use the credit is less than the predetermined threshold. Consequently, the agent 12 selects the first Internet operator so as not to lose the cash credit.

A third example transmission of current data from the user terminal 24 to a remote terminal (not shown) will now be described according to the second embodiment of the invention, in the case in which the call option is a combination between routing at minimum cost and optimisation of credits.

In step 200, the user dials a national call number from the WLAN/GSM 24 dual mode terminal 24, the terminal 24 being placed in the WLAN coverage of the terminal 21.

In this case, the agent 12 called upon by the WLAN terminal 21 acts in the same way as in the examples described above. During the request to setup a national communication, the terminal 24 sends a message to equipment 11 through the WLAN network.

In step 203, the agent 12 queries operator servers through the Internet network.

It is assumed that the user has a large credit for national calls on a pre-paid account at the GSM operator, although there are only few hours before expiration of this account.

In step 204, the agent 12 analyses response messages and determines that the pre-paid account at the GSM operator for national calls is nearing its expiration date and that there is a large cash credit, in other words the remaining time to use the credit is less than the predetermined threshold. Consequently, the agent 12 gives the necessary instruction to the dual mode terminal to set-up the call through the GSM operator so as not to lose the cash credit.

In step 205, the agent 12 notifies the dual mode terminal 24 through the WLAN network that the terminal should set up a call request through the GSM network. The telephone number to be dialled is given in the message sent by the agent 12. The WLAN/GSM dual mode terminal analyses the message received from the agent 12 and makes the corresponding call request with the GSM network. The terminal 24 includes software means to analyse the message and to make the call request using the number supplied by the agent. The number supplied by the agent 12 is useful because the initial call request from the dual mode terminal 24 could be made using a call function by name, in other words the terminal 24 sent a name during the initial request, located in a directory of equipment 11. In this case, the dual mode terminal 24 does not know the number to be called.

As a variant, the agent 12 may be integrated into the dual mode terminal 24. In this case, the agent 12 queries the servers through the Internet network. Preferably, the call through the Internet network is made using the WLAN network, for which the usage cost is usually less than the cost of the GSM network for querying servers. The WLAN network is connected to the equipment 11 that routes the query to the operators' servers.

When responses from operator servers are received, the equipment 11 routes the response to agent 12, in other words to the dual mode terminal 24 through the WLAN network.

The agent 12 then analyses responses as described above, and if the GSM network is selected to route the call, the agent 12 notifies the GSM function of the terminal 24 that it must set-up a call.

Other variants are possible. For example, in the case in which the call option is a combination between routing at minimum cost and optimisation of credits and the agent has determined that a credit has to be used, the decision to set up a call with the chosen operator may be made automatically or under the control of the user to whom a warning message is communicated. In this case, the user may or may not give his agreement. If the user does not give his agreement, the call is made using routing at minimum cost.

Although the invention has been described with reference to several particular embodiments, it is obvious that it is in no way limited and that it includes all technical equivalents of the means described and combinations of them if these combinations are within the scope of the invention.

## Claims

1. Method of optimising access to a telecommunication network before setting up a call, to transmit so-called current data, from a user terminal (2, 17, 19, 21, 24) to a remote terminal through a telecommunication network selected among a plurality of telecommunication networks (R₁, R₂, R₃ ; 13, 15, 23) capable of transmitting current data from said user terminal to said remote terminal, these networks being managed by a plurality of operators, consisting of:
a) for each operator, determining (103, 204) the value of at least one operator parameter from information stored in a database (4), and from at least one data parameter characterising said current data to be transmitted,
b) as a function of the values determined in step a, determining , which operator optimises the cost for transmission of current data,
c) selecting a network corresponding to the operator thus determined, then transmitting said current data through the network selected in this way;
**characterised in that** before the value of at least one operator parameter is determined (103, 204) from information stored in a database (4), it also includes a step consisting of updating said database as a function of transmissions made previously through each operator.

2. Method set forth in claim 1, **characterised in that** the value of at least one operator parameter is determined (103, 204), using the sub-steps described below, for each operator:
- determine the address of a server of said operator,
- and query said server to determine a value of at least one operator parameter.

3. Method set forth in claim 2, **characterised in that** it includes the following sub-steps to query said server to determine a value of at least one operator parameter:
- transmit an identifier and a password associated with a user account to said server, and
- query said server to obtain information about the current state of said user account.

4. Computer program comprising instruction codes that can be read or written on a medium and that can be run by a digital machine to implement the steps in the method set forth in one of claims 1 to 3.

5. Recording medium designed to implement the method as claimed in any one of claims 1 to 3.

6. Device programmed to implement the steps in the method set forth in any one of claims 1 to 3.
